# EUROPEAN PATENT APPLICATION

(11) **EP 3 095 810 A2**
(43) Date of publication of application: **23.11.2016**
(21) Application number: 16001171.4
(22) Date of filing: 23.05.2016
(51) Int. Cl.: C08J 9/14

(54) **BLOWING AGENT COMPOSITION**

(30) Priority: 22.05.2015 GB 201508840
(71) Applicant: Linde Aktiengesellschaft, 80331 München (DE)
(72) Inventor: JONES, Dennis, RG18 3AZ Thatcham (GB)
(74) Representative: Christie, Gemma Louise

(57) **Abstract**

The invention provides a blowing agent composition comprising at least 55%wt of a C₅ alkane, and at least 0.5 %wt of a further alkane and/or an ether. The further alkane is a C₃ alkane, a C₄ alkane and/or a C₆ alkane, which does not comprise a haloalkane, and the ether has the formula R¹OR², wherein R¹ and R² are both independently a C₁ to C₃ alkyl group.

## Description

The present invention relates to blowing agents, and a method of using such blowing agents to manufacture insulation material. In particular, the invention relates to a chemical blowing agent, and a method of using the chemical blowing agent to manufacture polyurethane (PU), polyisocyanurate (PIR) and phenolic foams.

Closed-cell foams are widely used for insulation purposes. In the construction industry, sandwich panels comprising a foam material between two metal facings are used in roofing and siding for their insulation and load-carrying capabilities. Poured and sprayed foams are also used for insulating large structures such as storage tanks. Additionally, electrical appliances, such as fridges and freezers, and refrigerated trucks and railcars use pour in place foams. All of these foams use blowing agents to produce a cellular structure in the polymer via a foaming process.

Traditional blowing agents include chlorofluorocarbons (CFCs) and hydrochlorofluorocarbons (HCFCs). However, because CFCs and HCFCs contribute to ozone depletion in the upper atmosphere, the use of CFCs and HCFCs has been phased out and alternative blowing agents have had to be developed. One of the most common blowing agents currently used in the UK is a blend of pentanes. Popular blends used as blowing agents are 70/30 Cyclopentane/Isopentane, 85/15 Cyclopentane/Isopentane, 75/25 Isopentane/N-Pentane, and 90/10 N-Pentane/Cyclopentane. However, a problem with these blends of pentanes is that they have a global warming potential (GWP) of 5.

Other blowing agents which are used in small quantities are pentafluoropropane (HFC). However, there are expensive to produce. Additionally, pentafluoropropane (HFC) has a GWP of 950.

WO03068838 discloses blowing agent compositions comprising 2-chloropropane. However, 2-chloropropane can be difficult to obtain and due to this limited availability using blowing agents containing this compound presents a risk to manufacturers.

The present invention arises from the inventor's work in trying to develop alternative blowing agents.

In accordance with a first aspect of the invention, there is provided a blowing agent composition comprising at least 55%wt of a C₅ alkane, and at least 0.5 %wt of a further alkane and/or an ether, wherein the further alkane is a C₃ alkane, a C₄ alkane and/or a C₆ alkane, which does not comprise a haloalkane, and the ether has the formula R¹OR², wherein R¹ and R² are both independently a C₁ to C₃ alkyl group.

Advantageously, the composition has a global warming potential (GWP) of less than 5. Additionally, blowing agents in accordance with the present invention have been found to produce material with enhanced lambda values when compared to prior art blowing agents.

The term "blowing agent" can be used interchangeably with the terms "pneumatogen" and "expansion agent". It will be appreciated that these terms may relate to a composition which is capable of producing a cellular structure via a foaming process in a variety of materials that undergo hardening or phase transition, such as polymers, plastics, and metals. Preferably, the blowing agent of the present invention is configured to produce a cellular structure in polymers.

Preferably, the composition comprises at least 60 wt%, 65 wt% or 70 wt% of the C₅ alkane. More preferably, the composition comprises at least 75 wt% or 80 wt% of the C₅ alkane. Most preferably, the composition comprises at least 85 wt% of the C₅ alkane.

Preferably, the composition comprises less than 99.5 wt%, 99 wt% or 98 wt% of the C₅ alkane. More preferably, the composition comprises less than 97 wt% or 96 wt% of the C₅ alkane. Most preferably, the composition comprises less than 95 wt% of the C₅ alkane.

Preferably, the composition comprises between 60 and 99.5 wt%, between 65 and 99 wt%, or between 70 and 98 wt% of the C₅ alkane. More preferably, the composition comprises between 75 and 97 wt% or between 80 and 96 wt% of the C₅ alkane. Most preferably, the composition comprises between 85 and 95 wt% of the C₅ alkane.

Preferably, the C₅ alkane does not comprise a haloalkane.

The C₅ alkane may comprise cyclopentane or n-pentane. Preferably, the C₅ alkane comprises cyclopentane.

Preferably, the composition has a boiling point which is greater than 35°C.

Advantageously, pure cyclopentane has a boiling point of 49.2°C. Accordingly, depending on the quantity of the further alkane (i.e. C₃ alkane, the C₄ alkane, and/or the C₆ alkane) and/or the ether used, the boiling point of the composition will be greater than 35°C which means that the composition will be classed as "highly" flammable. Since the composition does not have a boiling point which is less than or equal to 35°C, it is not "extremely" flammable and this avoids any Control of Major Accident Hazards (COMAH) issues.

In one embodiment, the composition comprises the further alkane, which may be a C₃ alkane, a C₄ alkane and/or a C₆ alkane. It may be understood that the C₃ alkane, the C₄ alkane, and/or the C₆ alkane does not comprise a chlorine, fluorine, bromine or iodine atom. Preferably, the C₃ alkane, the C₄ alkane, and/or the C₆ alkane in the composition of the first aspect are comprised in liquid petroleum gas (LPG).

Preferably, the composition comprises at least 1 wt%, 2 wt% or 3 wt% of the C₃ alkane, the C₄ alkane, and/or the C₆ alkane, which may be liquid petroleum gas. More preferably, the composition comprises at least 4 wt%, 5 wt% or 6 wt% of the C₃ alkane, the C₄ alkane, and/or the C₆ alkane. Most preferably, the composition comprises at least 7 wt%, 8 wt% or 9 wt% of the C₃ alkane, the C₄ alkane, and/or the C₆ alkane.

Preferably, the composition comprises less than 45 wt%, 40 wt% or 35 wt% of the C₃ alkane, the C₄ alkane, and/or the C₆ alkane, which may be petroleum gas. More preferably, the composition comprises less than 30 wt%, 25 wt% or 20 wt% of the C₃ alkane, the C₄ alkane, and/or the C₆ alkane. Most preferably, the composition comprises less than 15 wt% of the C₃ alkane, the C₄ alkane, and/or the C₆ alkane.

In one embodiment, the composition comprises between 1 and 45 wt%, between 2 and 35 wt% or between 3 and 25 wt% of the C₃ alkane, the C₄ alkane, and/or the C₆ alkane. Preferably, the composition comprises between 4 and 20 wt% of the C₃ alkane, the C₄ alkane, and/or the C₆ alkane. Most preferably, the composition comprises between 5 and 15 wt% of the C₃ alkane, the C₄ alkane, and/or the C₆ alkane.

However, in an alternative embodiment, a lower concentration of the C₃ alkane, the C₄ alkane, and/or the C₆ alkane may be used. Accordingly, the composition may comprise between 0.5 and 10 wt%, between 0.5 and 9 wt%, between 0.5 and 8 wt%, between 0.5 and 7 wt% or between 0.5 and 6 wt% of the C₃ alkane, the C₄ alkane, and/or the C₆ alkane. Preferably, the composition comprises between 0.5 and 5 wt%, between 0.5 and 4 wt% or between 0.5 and 3 wt% of the C₃ alkane, the C₄ alkane, and/or the C₆ alkane. Most preferably, the composition comprises between 0.5 and 2 wt% of the C₃ alkane, the C₄ alkane, and/or the C₆ alkane.

In one preferred embodiment, the composition comprises the further alkane, and the further alkane comprises a C₃ alkane.

The composition may comprise at least 0.5 wt% of the C₃ alkane. Preferably, the composition comprises at least 1 wt% of the C₃ alkane. More preferably, the composition comprises at least 1.5 wt% of the C₃ alkane.

The composition may comprise less than 30 wt%, 25 wt%, 20 wt%, 15 wt%, 10 wt% or 5 wt% of the C₃ alkane. Preferably, the composition comprises less than 4 wt%, 3 wt% or 2 wt% of the C₃ alkane. Most preferably, the composition comprises 1.8 wt% or less of the C₃ alkane.

The inventors have found that a composition comprising cyclopentane and more than 1.8 wt% propane is "extremely flammable". Accordingly, it is advantageous that the composition comprises 1.8 wt% or less propane, as it will then be classed as "highly flammable", and not "extremely flammable".

However, it will be understood that whilst it might be advantageous for some users to have the composition that is classified as "highly flammable", and not "extremely flammable", to avoid any control of major accident hazards (COMAH) issues, other users may be happy to use compositions which are classified as "extremely flammable".

Preferably, the composition comprises between 0.5 wt% and 5 wt% of the C₃ alkane. More preferably, the composition comprises between 1 wt% and 4 wt% or between 1 wt% and 3 wt% of the C₃ alkane. Most preferably, the composition comprises between 1.5 wt% and 2 wt% of the C₃ alkane.

Preferably, the C₃ alkane comprises propane.

In another preferred embodiment, the composition comprises the further alkane, and the further alkane comprises a C₄ alkane.

Preferably, the composition comprises at least 1 wt%, 2 wt% or 3 wt% of the C₄ alkane. More preferably, the composition comprises at least 4 wt%, 5 wt% or 6 wt% of the C₄ alkane. Most preferably, the composition comprises at least 7 wt%, 8 wt% or 9 wt% of the C₄ alkane.

Preferably, the composition comprises less than 45 wt%, 40 wt% or 35 wt% of the C₄ alkane. More preferably, the composition comprises less than 30 wt%, 25 wt% or 20 wt% of the C₄ alkane. Most preferably, the composition comprises less than 15 wt% of the C₄ alkane.

In one embodiment, the composition comprises between 1 and 45 wt%, between 2 and 35 wt% or between 3 and 25 wt% of the C₄ alkane. Preferably, the composition comprises between 4 and 20 wt% of the C₄ alkane. Most preferably, the composition comprises between 5 and 15 wt% of the C₄ alkane.

Preferably, the C₄ alkane comprises n-butane and/or isobutane.

In one embodiment the C₄ alkane comprises n-butane and isobutane. The ratio of n-butane to isobutane may be between 1:1 and 3:1. In a preferred embodiment, the ratio of n-butane to isobutane is about 2:1.

In yet another preferred embodiment, the composition comprises the further alkane, and the further alkane comprises a C₆ alkane.

Preferably, the composition comprises at least 1 wt%, 2 wt% or 3 wt% of the C₆ alkane. More preferably, the composition comprises at least 4 wt%, 5 wt% or 6 wt% of the C₆ alkane. Most preferably, the composition comprises at least 7 wt%, 8 wt% or 9 wt% of the C₆ alkane.

Preferably, the composition comprises less than 45 wt%, 40 wt% or 35 wt% of the C₆ alkane. More preferably, the composition comprises less than 30 wt%, 25 wt% or 20 wt% of the C₆ alkane. Most preferably, the composition comprises less than 15 wt% of the C₆ alkane.

In one embodiment, the composition comprises between 1 and 45 wt%, between 2 and 35 wt% or between 3 and 25 wt% of the C₆ alkane. Preferably, the composition comprises between 4 and 20 wt% of the C₆ alkane. Most preferably, the composition comprises between 5 and 15 wt% of the C₆ alkane.

Preferably, the C₆ alkane comprises n-hexane and/or isohexane.

In one embodiment the C₆ alkane comprises n-hexane and isohexane. The ratio of n-hexane to isohexane may be between 1:1 and 3:1. In a preferred embodiment, the ratio of n-hexane to isohexane is about 2:1.

Thus, in a first preferred embodiment, the blowing agent composition comprises at least 85 wt% cyclopentane, and at least 0.5 wt% of a C₃ alkane, which does not comprise a haloalkane.

In a more preferred embodiment, the blowing agent composition comprises at least 90 wt% cyclopentane, and at least 0.5 wt% propane.

In an even more preferred embodiment, the blowing agent composition comprises at least 95 wt% cyclopentane, and at least 0.5 wt% propane.

In a most preferred embodiment, the blowing agent composition comprises about 98 wt% cyclopentane, and about 2 wt% propane.

Thus, in an alternative preferred embodiment, the blowing agent composition comprises at least 85wt% cyclopentane, and at least 0.5 wt% of a C₄ alkane, which does not comprise a haloalkane.

In a more preferred embodiment, the blowing agent composition comprises at least 85 wt% cyclopentane, and at least 0.5 wt% n-butane and/or isobutane.

In an even more preferred embodiment, the blowing agent composition comprises at least 90 wt% cyclopentane, and at least 0.5 wt% n-butane and isobutane.

In a most preferred embodiment, the blowing agent composition comprises about 91 wt% cyclopentane, about 3 wt% n-butane and about 6 wt% isobutane.
In another embodiment, the composition comprises an ether.

The composition may comprise at least 0.5 wt% or 1 wt% of the ether. Preferably, the composition comprises at least 1.5 wt% or 2 wt% of the ether. More preferably, the composition comprises at least 2.5 wt% or 3 wt % of the ether.

The composition may comprise less than 30 wt%, 25 wt%, 20 wt% or 15 wt% of the ether. Preferably, the composition comprises less than 10 wt%, 9 wt%, 8 wt%, 7 wt% or 6 wt% of the ether. Most preferably, the composition comprises 5 wt% or 4 wt% or less of the ether.

Preferably, the composition comprises between 0.5 wt% and 15 wt% or between 1 wt% and 10 wt% of the ether. More preferably, the composition comprises between 1.5 wt% and 9 wt% or between 2 wt% and 7 wt% of the ether. Most preferably, the composition comprises between 2.5 wt% and 5 wt% or between 3 wt% and 4.5 wt% of the ether.

It will be appreciated that R¹ and R² may be independently selected from a methyl, an ethyl and a propyl group. The propyl group may be an n-propyl group or an isopropyl group.

Preferably, the ether has the formula R¹OR² wherein R¹ and R² are both independently a C₁ to C₃ alkyl group which is not substituted with a halogen. It may be understood that the methyl, ethyl and/or propyl group does not comprise a chlorine, fluorine, bromine or iodine atom.

Accordingly, the ether may comprise dimethyl ether, diethyl ether, dipropyl ether, diisopropyl ether, 2-propoxypropane, methoxyethane, 1-methoxypropane, 2-methoxypropane, 1-ethoxypropane or 2-ethoxypropane.

Preferably, R¹ is a methyl group. Preferably, R₂ is a methyl group. Most preferably, both R¹ and R² are methyl groups. Accordingly, in a most preferred embodiment the ether is dimethyl ether (DME).

Thus, in a further preferred embodiment, the blowing agent composition comprises at least 85 wt% cyclopentane, and at least 0.5 wt% of an ether, having the formula R¹OR² wherein R¹ and R² are both independently a C₁ to C₃ alkyl group which is not substituted with a halogen.

In a more preferred embodiment, the blowing agent composition comprises at least 85 wt% cyclopentane, and at least 0.5 wt% dimethyl ether.

In an even more preferred embodiment, the blowing agent composition comprises at least 90 wt% cyclopentane, and at least 0.5 wt% dimethyl ether.

In a most preferred embodiment, the blowing agent composition comprises about 96.5 wt% cyclopentane, and about 3.5 wt% dimethyl ether.

In accordance with a second aspect, there is provided use of the composition of the first aspect to produce a cellular structure.

In accordance with a third aspect, there is provided a method of producing a cellular structure, the method comprising:
- contacting the blowing agent composition of the first aspect with a reaction mixture comprising monomers; and
- allowing the monomers to polymerise, thereby forming a cellular structure.

The method may comprise a step of allowing the blowing agent to react and form gaseous bubbles within the reaction mixture. Preferably, the step of allowing the blowing agent to react occurs before the step of allowing the monomers to polymerise.

In one embodiment, the cellular structure comprises polyurethane (PU) or polyisocyanurate (PIR).

The monomers compounds may comprise polyols and/or polyisocyanate compounds. The monomers preferably comprise polyols and polyisocyanate compounds. The polyisocyanate compounds preferably comprise methylene diphenyl diisocyanate (MDI).

The reaction mixture may comprise a foam stabiliser.

The reaction mixture may comprise a catalyst.

The reaction mixture may comprise flame extinguishing additives, such as tris(2-chloro-i-methylethyl) phosphate (TCPP).

In an alternative embodiment, the cellular structure comprises a phenolic foam.

In accordance with a fourth aspect, there is provided a polymer comprising a cellular structure obtained or obtainable by the method of the third aspect.

The cellular structure may preferably comprise an insulating material.

Thus, in accordance with a fifth aspect, there is provided a method of producing an insulating material, the method comprising:
- contacting the blowing agent composition of the first aspect with a reaction mixture comprising monomers; and
- wallowing the monomers to polymerise, thereby forming an insulating material.

The method may comprise a step of allowing the blowing agent to react and form gaseous bubbles within the reaction mixture. Preferably, the step of allowing the blowing agent to react occurs before the step of allowing the monomers to polymerise.

In one embodiment, the method comprises an additional step of sandwiching the insulating material between two facing panels to obtain a sandwich panel. The facing panels may comprise metal panels. Alternatively, the facing panels may comprise paper or foil facings.

In an alternative embodiment the method comprises an additional step of pouring or spraying the reaction mixture into a desired location prior to the step of allowing the mixture to polymerise.

Advantageously, the reaction mixture will polymerise in a desired location.

The desired location may be adjacent to a storage tank. Alternatively, the desired location may be in a fridge, freezer or other refrigerated container.

The insulating material may comprises polyurethane (PU), polyisocyanurate (PIR) or a phenolic foam.

Preferably, the monomers and reaction mixture are as defined in accordance with the third aspect.

Preferably, the panels comprise metal panels or panels comprising other facing materials.

In accordance with a sixth aspect, there is provided an insulation panel obtained or obtainable by the method of the fifth aspect.

The inventor believes that the cellular structure produced in accordance with the fourth aspect and the insulation panel produced in accordance with the sixth aspect is novel *per se.* I

Accordingly, in accordance with a seventh aspect, there is provided a cellular structure comprising a polymer and a C₃ alkane, a C₄ alkane, a C₆ alkane and/or an ether, wherein the C₃, C₄ and/or C₆ alkane does not comprise a haloalkane and the ether has the formula R¹OR² wherein R¹ and R² are both independently a C₁ to C₃ alkyl group.

Preferably, the polymer comprises polyurethane (PU), polyisocyanurate (PIR) or a phenolic foam.

Preferably, the cellular structure also comprises a C₅ alkane. The C₅ alkane may comprise cyclopentane or n-pentane. Preferably, the C₅ alkane comprises cyclopentane.

In accordance with an eighth aspect, there is provided an insulation panel comprising the cellular structure of the seventh aspect.

Preferably, the insulation panel is a flexible faced panel or a sandwich panel.

In a ninth aspect, there is provided the use of liquid petroleum gas and a C₅ alkane, as a blowing agent.

In accordance with a tenth aspect, there is provided a blowing agent composition comprising at least 55%wt of a C₅ alkane, and at least 0.5 %wt of a C₃ alkane, a C₄ alkane and/or a C₆ alkane, wherein the C₃, C₄ or C₆ alkane does not comprise a haloalkane.

Accordingly, in accordance with an eleventh aspect, there is provided a cellular structure comprising a polymer and a C₃ alkane, a C₄ alkane, and/or a C₆ alkane, wherein the C₃, C₄ or C₆ alkane does not comprise a haloalkane.

All features described herein (including any accompanying claims, abstract and drawings), and/or all of the steps of any method or process so disclosed, may be combined with any of the above aspects in any combination, except combinations where at least some of such features and/or steps are mutually exclusive.

For a better understanding of the invention, and to show how embodiments of the same may be carried into effect, reference will now be made, by way of example, to the accompanying Figures, in which:-
**Figure 1** is a table showing the data obtained for various samples which were created from a foam mould test;
**Figure 2** is a table showing the data obtained for various samples which were created from a foam cup test;
**Figure 3** is a schematic depiction of a semiautomatic production line;
**Figure 4** is a graph showing the lambda value for foams produced using a standard prior art formulation or using two embodiments of a formulation according to the invention against the time that the measurement was made.

### Example 1

Samples of two new blowing agent compositions according to the invention were submitted to test foam properties in comparison with a standard polyisocyanurate (PIR) formulation.

Two types of test were used to assess the different blowing agents; foam mould and foam cup tests. Lambda samples were tested from the foam mould tests and foam reaction kinetics was assessed through the cup tests. Each sample was tested in triplicate and given a reference code.

**Table 1: Material description**

| **Reference code** | **Description** |
|---|---|
| Cyclo B - 1 to 3 | 90 wt% Cyclopentane, 10 wt% Butane |
| Cyclo IB - 1 to 3 | 92.5 wt% Cyclopentane, 7.5 wt% Isobutane |
| Std - 1 to 3 | 70 wt% Cyclopentane, 30 wt% Isopentane |

### Experimental and Results

Foam properties were assessed in the laboratory using hand-mixed foams to simulate panel manufacture. While it cannot replicate the exact processing conditions of a composite panel production line, it can be used to qualitatively evaluate the differences in foam properties compared with a standard, proven formulation. A 300-index PIR foam formulation was used for each test described. The formulation remained unchanged throughout; the only difference was the type of blowing agent used. Loading levels of all chemicals remained the same to assess the direct effect of each different blowing agent.

### Foam mould test

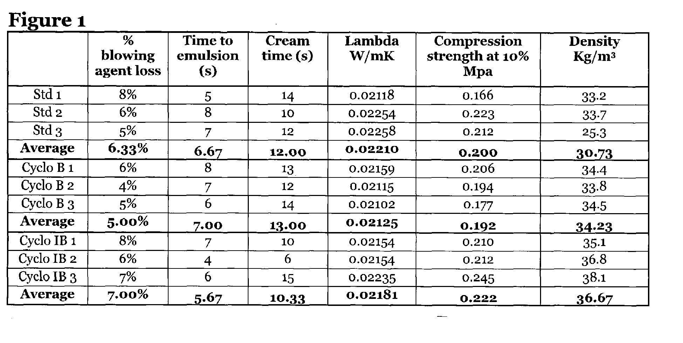

The foam formulation was prepared and poured onto a 350 x 350 x 80 mm mould. The mould was closed instantly and allowed to react for 2 minutes. The foam was cured for a further 10 minutes in a 60°C oven. The specimen was taken out and allowed to cure at ambient temperature for 24 hours. The data obtained for the various samples is shown in Figure 1, and is discussed below.

### % blowing agent loss

The final step of A-side preparation is the addition of the blowing agent. The required amount is added, the liquids are mixed to form an emulsion and the A-side is "weighed back" to measure how much of the blowing agent has been lost during mixing. The smaller the % loss the better compatibility the blowing agent has with the A-side components.

It will be understood that in this context the term "A-side" refers to the mixture of the polyol and other components, as opposed to the "B-side" which is the methylene diphenyl diisocyanate (MDI) component.

It will be observed that in this experiment the Cyclo B samples show the least loss. Accordingly, it appears that the Cyclo B formulation has the best compatibility with the PIR components.

### Time to emulsion

The time taken to form an emulsion varies according to polyol, surfactant and blowing agent type. Quicker formation is preferred, indicating a better mix.

The Cyclo IB samples formed an emulsion the quickest, indicating that these samples had the best mix.

### Cream time

Cream time corresponds to the start of bubble rise. A faster cream time indicates an improved availability of the components involved in the initial foaming reaction. Faster cream time is usually teamed with faster completion of the foaming reaction.

The Cyclo IB samples had the fastest cream time, indicating that these samples completed the foaming reaction quickest.

### Lambda

Lambda is the value of the insulating capacity of a product. The lower the lambda value, the better the insulating capacity of a product. This is the most important value for comparing one blowing agent to another.

The materials made using the Cyclo B and Cyclo IB blowing agents had lower lambda values, and therefore have a better insulating capacity, than the material made using the Std blowing agent. Accordingly, this result suggests that blowing agents in accordance with the present invention produce better insulating foams then prior art blowing agents.

### Compression strength

The compression strength is the capacity of a material or structure to withstand loads tending to reduce size. The material made using the Cyclo IB blowing agent had the greatest compression strength.

### Density

The materials made using the Cyclo B and Cyclo IB blowing agents were denser than the material made using the Std blowing agent.

### Foam cup test

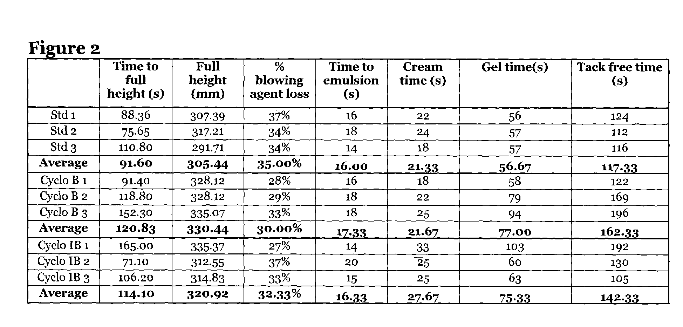

The formulation was prepared and poured into a 1 Litre paper cup. The cup was placed under a laser level indicator and allowed to rise. The data obtained for the various samples is shown in Figure 2, and is discussed below.

### Time to full height

This is the time taken for the foam to rise to its full height. If the rise is too slow, a production line would have to run slowly. However, if the rise is too fast then a full rise would be poor.

In this experiment the Cyclo B samples had the longest time to full height and the Std samples had the shortest.

### Full height

This is the measurement of the full height of the sample once it has finished rising. Accordingly, it can be seen that while the Cyclo B samples took longest to reach full heigh it also rose to the greatest full height. Similarly, the Std samples rose to the lowest full height.

### % blowing agent loss

As was observed for the foam mould test, the Cyclo B samples had the lowest % blowing agent loss, suggesting that the Cyclo B formulation has the best compatibility with the PIR components.

However, in this experiment, the Cyclo IB samples also exhibited a lower % blowing agent loss than the Std samples.

### Time to emulsion

In this experiment, the Std samples exhibited the quickest time to emulsion. However, the time for the Cyclo IB samples to form an emulsion was very close to the Std samples.

### Cream time

The cream time is the beginning point of the foam rise where the colour of the mixture changes to a lighter colour as a result of the generation of gas by the blowing agent.

Again, the Std samples exhibited the shortest cream time. However, the time for the Cyclo B samples was very similar to the Std samples.

### Gel time

The gel time is the starting point of stable polymer network formation via urethane and urea linkages and intensive allophonate and biuret crosslinking and branching, respectively.

The Std samples had the shortest gel time, whereas the Cyclo B and Cyclo IB samples had longer gel times which were comparable to each other.

### Tack free time

The tack free time is when the outer surface of the foam loses its stickiness as a result of crosslinking.

The shortest time was observed for the Std samples, and the longest time was observed for the Cyclo IB samples.

### Example 2

The inventor carried out a further trial comparing the standard formulation, comprising 70 wt% cyclopentane and 30 wt% isopentane, against a new formulation of the invention comprising 91 wt% cyclopentane, 6 wt% isobutane and 3 wt% n-butane. The new formulation was tested three times and the results can be seen in table 2.

**Table 2: Results using new formulation comprising 91 wt% cyclopentane, 6 wt% isobutane and 3 wt% n-butane.**

| Test Sample | 300X300X50 Sample Weight (grams) | Sample Density (kg/m³) | Lamda (W/mK) |
|---|---|---|---|
| Standard | 141.82 | 31.37 | 0.02257 |
| New Formulation | 149.16 | 32.3 | 0.02035 |
| New Formulation | 148.35 | 32.73 | 0.02114 |
| New Formulation | 145.96 | 32.6 | 0.02167 |

It will be seen that the new formulation consistently produced foams with lambda values below foams produced using the standard formulation. Additionally, the average lambda value for the foams produced using the new formulation was 0.02105, which is lower than the lambda values obtained using formulations Cyclo B and Cyclo IB, discussed above.

### Example 3

The inventor carried out a further trial comparing the standard formulation, comprising 70 wt% cyclopentane and 30 wt% isopentane, against two further embodiments of the invention, FBA-2 and FBA-3. FBA-2 comprises 98 wt% cyclopentane and 2 wt% propane, and FBA-3 comprises 96.5 wt% cyclopentane and 3.5 wt% dimethyl ether.

Each sample was hand-mixed and 8% more pentane was used in order to adequately fill a 360 mm x 360 mm mould. The addition of the extra pentane is to account for losses in lab based mixing and does not affect the desired composition. Hardened foam was removed from the mould and allowed to cure for at least 6 minutes. Immediately before lambda testing the sample was trimmed to a 300 mm x 300 mm x 40 mm

The lambda values measured can be seen in table 3.

**Table 3: Lambda valuesnew formulations FBA-2 and FBA-3**

| **Formulation Used** | **Date** | **Time** | **Lamda value (W/mK)** | **Average Lambda value (W/mk)** |
|---|---|---|---|---|
| Standard Formulation | 07/04/2016 | 10:00:00 | 0.02165 | 0.02224 |
| | 08/04/2016 | 12:00:00 | 0.02222 | |
| | 11/04/2016 | 10:00:00 | 0.02248 | |
| | 11/04/2016 | 16:00:00 | 0.02249 | |
| | 12/04/2016 | 14:00:00 | 0.02235 | |
| FBA-3 | 07/04/2016 | 14:00:00 | 0.02068 | 0.02109 |
| | 08/04/2016 | 14:00:00 | 0.0208 | |
| | 11/04/2016 | 12:00:00 | 0.02151 | |
| | 12/04/2016 | 10:00:00 | 0.02139 | |
| | 12/04/2016 | 16:00:00 | 0.02108 | |
| FBA-2 | 08/04/2016 | 10:00:00 | 0.02124 | 0.02118 |
| | 08/04/2016 | 16:00:00 | 0.02075 | |
| | 11/04/2016 | 14:00:00 | 0.02133 | |
| | 12/04/2016 | 12:00:00 | 0.02126 | |
| | 13/04/2016 | 10:00:00 | 0.02132 | |

As can be seen from the table, foams produced using FBA-3 had the lowest lambda values of the formulations tested, with an average lambda value of 0.02109 W/mk. Foams produced using FBA-2 also had low lambda values, with an average of 0.02118 W/mk. This is similar to the formulation comprising 91 wt% cyclopentane, 6 wt% isobutane and 3 wt% n-butane tested in Example 2.

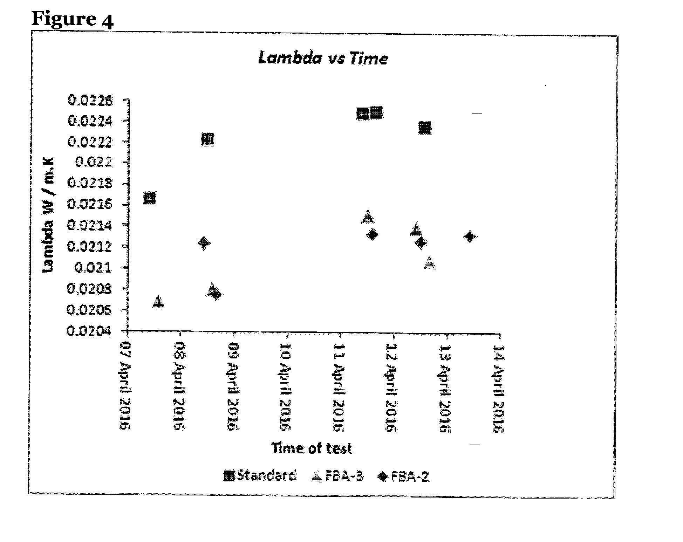

It should be noted that both FBA-2 and FBA-3 produced foams with lambda values that were on average at least 1 mW/mK lower than the foams produced using the standard formulation, as shown in Figure 4.

Additionally, a reduction in thermal resistance of approximately 1 mW/mK after 5 days was measured for all three blowing agents.

The dimensional stability and compression strength was also measured can be seen in table 4.

**Table 4: Dimensional stability and compression strength for new formulations FBA-2 and FBA-3**

| **Blowing Agent** | **Average Dimensional Stability** | | **Compression Strength (MPa)** |
|---|---|---|---|
| | **+*80 °C*** | **-*20 °C*** | |
| Standard (std) | 0.46% | 0.20% | 0.259 |
| FBA-3 | 0.46% | 0.17% | 0.257 |
| FBA-2 | 0.11% | 0.16% | 0.2475 |

All of the samples were well within the tolerance of 1.5%.

Finally, the compression strength is similar for all three of the blowing agents.

### Example 4

It will be appreciated that the above experiments comprised mixing the materials by hand. However, in industry a laminator could be used and production would be semi automatic.

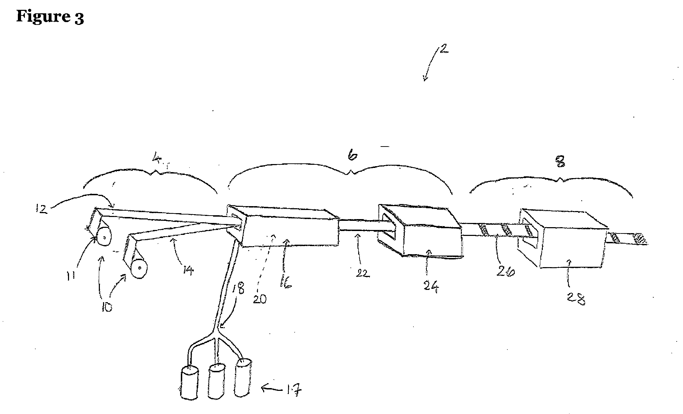

A suitable semiautomatic production line 2 for producing sandwich elements is shown schematically in Figure 3. The production line 2 can be split into three sections; the inlet section 4, the centre section 6 and the outlet section 8.

The inlet section 4 comprises a twin uncoiling station 10, where roll feeders 11, uncoil the bottom 12 and top 14 metal facings. The inlet section 4 also comprises profiling machines (not shown) which shape the bottom 12 and top 14 metal facing.

The bottom 12 and top 14 metal facing then enters the centre section 6, where it passes into an oven 16. Preferably, the bottom 12 and top 14 metal facing are preheated before entering the laminator 16 to ensure an optimum foam reaction of the raw materials.

The blowing agent, polyol components and other foam components are stored in chemical storage containers 17. The components are mixed at a premixing station 18 and homogeneous mixing is ensured due to the foaming portal 20. The mixture is then placed between the bottom 12 and top 14 metal facing and the temperature and pressure within the oven 16 is controlled to render the foam. The sides of the bottom 12 and top 14 metal facing are sealed as the foam is rendered.

The continuous element 22 is then passed into a cutter 22 which uses a saw blade to cut the element 22 into panels 26.

The panels 26 will then pass into the outlet section 8. The outlet section contains a cooling section 28 which dissipates the reaction heat. It will be appreciated that the cooling section may comprise a natural cooling section. However, in the embodiment illustrated, the cooling section comprises a conveyor cooling system. The panels can then be stacked.

## Claims

1. A blowing agent composition comprising at least 55%wt of a C₅ alkane, and at least 0.5 %wt of a further alkane and/or an ether, wherein the further alkane is a C₃ alkane, a C₄ alkane and/or a C₆ alkane, which does not comprise a haloalkane, and the ether has the formula R¹OR², wherein R¹ and R² are both independently a C₁ to C₃ alkyl group.

2. A blowing agent composition according to claim 1, wherein the composition comprises at least 85 wt% of the C₅ alkane, the C₅ alkane does not comprise a haloalkane, and the C₅ alkane preferably comprises cyclopentane or n-pentane, and more preferably comprises cyclopentane.

3. A blowing agent composition according to either claim 1 or claim 2, wherein the composition has a boiling point which is greater than 35°C.

4. A blowing agent composition according to any preceding claim, wherein the C₃ alkane, the C₄ alkane and/or the C₆ alkane in the composition are comprised in liquid petroleum gas (LPG).

5. A blowing agent composition according to any preceding claim, wherein the composition comprises between 0.5 wt% and 5 wt% of the C₃ alkane, and the C₃ alkane comprises propane.

6. A blowing agent composition according to any preceding claim, wherein the composition comprises between 5 and 15 wt% of the C₄ alkane and the C₄ alkane comprises n-butane and/or isobutane.

7. A blowing agent composition according to claim 6, wherein the C₄ alkane comprises n-butane and isobutane, and the ratio of n-butane to isobutane is between 1:1 and 3:1.

8. A blowing agent composition according to any preceding claim, wherein the composition comprises between 0.5 wt% and 15 wt% of the ether and the ether is dimethyl ether (DME).

9. Use of the composition of any one of claims 1 to 8 to produce a cellular structure.

10. A method of producing a cellular structure, the method comprising:
- contacting the blowing agent composition of any of claims 1 to 8 with a reaction mixture comprising monomers; and
- allowing the monomers to polymerise, thereby forming a cellular structure.

11. A method according to claim 10, wherein the cellular structure comprises polyurethane (PU), polyisocyanurate (PIR) or a phenolic foam.

12. A method of producing an insulating material, the method comprising:
- contacting the blowing agent composition of any of claims 1 to 8 with a reaction mixture comprising monomers; and
- allowing the monomers to polymerise, thereby forming an insulating material.

13. A method according to any one of claims 10 to 12, wherein the method comprises a step of allowing the blowing agent to react and form gaseous bubbles within the reaction mixture.

14. A polymer comprising a cellular structure obtained or obtainable by the method of either of claims 10 or 11.

15. An insulation panel obtained or obtainable by the method of claim 12.

16. A cellular structure comprising a polymer and a C₃ alkane, a C₄ alkane, a C₆ alkane and/or an ether, wherein the C₃, C₄ or C₆ alkane does not comprise a haloalkane and the ether has the formula R¹OR² wherein R¹ and R² are both independently a C₁ to C₃ alkyl group.

17. A cellular structure according to claim 16, wherein the polymer comprises polyurethane (PU), polyisocyanurate (PIR) or a phenolic foam.

18. An insulation panel comprising the cellular structure of either claim 16 or claim 17.

19. Use of liquid petroleum gas and a C₅ alkane, as a blowing agent.
